# FASCICULE DE BREVET EUROPEEN

(11) **EP 3 874 137 B1**
(45) Date de publication et mention de la délivrance du brevet: **09.11.2022**
(21) Numéro de dépôt: 19845595.8
(22) Date de dépôt: 17.12.2019
(51) Int. Cl.: F02C 9/32, F02C 9/46

(54) **SYSTÈME ET PROCÉDÉ DE COMMANDE D'UNE VITESSE DE ROTATION D'UNE TURBOMACHINE D'AÉRONEF AVEC GESTION DE PANNE**
SYSTEM UND VERFAHREN ZUR STEUERUNG EINER DREHZAHL EINES FLUGZEUGTRIEBWERKS MIT FEHLERVERWALTUNG
SYSTEM AND METHOD FOR CONTROLLING A SPEED OF ROTATION OF AN AIRCRAFT TURBINE ENGINE WITH FAULT MANAGEMENT

(30) Priorité: 21.12.2018 FR 1873857
(43) Date de publication de la demande: 08.09.2021
(73) Titulaire: SAFRAN AIRCRAFT ENGINES, 75015 Paris (FR)
(72) Inventeur: DENEUVE, Sébastien Jean Fernand, 77550 MOISSY-CRAMAYEL (FR); LE BRUN, Christophe Marc Alexandre, 77550 MOISSY-CRAMAYEL (FR)
(74) Mandataire: Brevalex
(86) Numéro de dépôt international: PCT/FR2019/053101
(87) Numéro de publication internationale: WO 2020/128286

(56) Documents cités:
- FR-A1- 2 992 355
- US-A1- 2007 005 219
- US-A1- 2008 163 931

## Description

### DOMAINE TECHNIQUE

L'invention se situe dans le domaine de la commande d'une turbomachine d'aéronef et, plus précisément, dans le domaine de l'asservissement de la vitesse de rotation d'une turbomachine par contrôle d'un doseur de carburant. Elle concerne un système et un procédé de commande pour une turbomachine d'aéronef, ainsi qu'une turbomachine équipée du système de commande.

### ÉTAT DE LA TECHNIQUE ANTÉRIEURE

La vitesse de rotation d'une turbomachine d'aéronef est généralement contrôlée par un doseur de carburant comprenant un tiroir doseur, dont la position détermine un débit volumique de carburant injecté dans la chambre de combustion, et un actionneur agencé pour déplacer le tiroir doseur en fonction d'un courant électrique de commande. Pour la plupart des turbomachines, un asservissement de la vitesse de rotation sur une consigne de vitesse est réalisé pour obtenir de meilleures performances de la turbomachine, notamment en termes de réponse à la consigne de vitesse. Cet asservissement peut notamment reposer sur une double boucle d'asservissement, à savoir une boucle globale asservissant la vitesse de rotation de la turbomachine en calculant une consigne de position du tiroir doseur, et une boucle locale asservissant la commande de l'actionneur en fonction d'une position du tiroir doseur, mesurée par un capteur de position. Un inconvénient de cette double boucle d'asservissement est qu'en cas de défaillance du capteur de position, l'ensemble de l'asservissement de la vitesse de rotation ne peut plus être réalisé. La perte du capteur de position conduit alors à un arrêt de la turbomachine. Sur un aéronef multimoteur, cela implique une redistribution de la poussée et de la génération d'énergie électrique sur les turbomachines restantes. Sur un aéronef monomoteur, la perte du capteur de position est plus critique puisqu'elle implique non seulement une perte totale de poussée mais également une perte de la génération d'énergie électrique. Le capteur de position étant un élément critique pour le vol de l'aéronef, il est normalement doublé. Chaque capteur de position fournit alors une mesure de position à un correcteur de la boucle locale d'asservissement, lequel effectue l'asservissement d'après une valeur moyenne des deux mesures de position. Néanmoins, en présence de deux capteurs de position, un problème se pose en cas de désaccord entre les mesures de position. Le correcteur n'est pas en mesure de déterminer laquelle des mesures de position est correcte et doit être utilisée pour l'asservissement. Ainsi, même en cas de défaillance d'un seul capteur de mesure, l'asservissement de la vitesse de rotation de la turbomachine peut être empêché. A fortiori, l'asservissement est empêché en cas de perte des deux capteurs de position.

Compte tenu de ce qui précède, l'invention a pour objectif de fournir un système de commande d'une turbomachine d'aéronef permettant d'asservir sa vitesse de rotation sur une consigne même en cas de défaillance d'un capteur de position mesurant une position du tiroir doseur. L'invention a encore pour objectif de fournir un système de commande garantissant un fonctionnement de la turbomachine dans des plages de fonctionnement nominales même en l'absence d'information sur la position du tiroir doseur.

Un système de commande pour une turbomachine d'aéronef selon l'art antérieur est connu dans le document US 2007/005219 A1.

### EXPOSÉ DE L'INVENTION

À cet effet, l'invention repose sur un asservissement de la vitesse de rotation s'affranchissant de la mesure de position du tiroir doseur. L'actionneur est piloté directement en fonction d'un écart entre la consigne de vitesse de rotation et la mesure de vitesse de rotation.

Plus précisément, l'invention a pour objet un système de commande pour une turbomachine d'aéronef, la turbomachine comprenant :
▪ une chambre de combustion,
▪ un doseur de carburant comportant un tiroir doseur dont une position détermine un débit volumique de carburant injecté dans la chambre de combustion et un actionneur agencé pour déplacer le tiroir doseur en fonction d'un courant électrique de commande,
▪ un capteur de position agencé pour mesurer une position du tiroir doseur et délivrer une mesure de position,
▪ un capteur de vitesse agencé pour mesurer une vitesse de rotation de la turbomachine et délivrer une mesure de vitesse de rotation, et
▪ une unité de contrôle agencée pour délivrer une consigne de vitesse de rotation, pour détecter une défaillance du capteur de position et pour délivrer un signal de défaillance en cas de détection d'une défaillance du capteur de position. Selon l'invention, le système de commande comprend :
▪ une chaîne de traitement en mode nominal comportant :
   □ un correcteur global agencé pour recevoir la consigne de vitesse de rotation et la mesure de vitesse de rotation et déterminer une consigne de débit massique de carburant en fonction de la consigne de vitesse de rotation et de la mesure de vitesse de rotation,
   □ un module de conversion agencé pour convertir la consigne de débit massique de carburant en une consigne de position, et □ un correcteur local agencé pour recevoir la consigne de position et la mesure de position et déterminer un courant électrique de commande en mode nominal en fonction de la consigne de position et de la mesure de position,
▪ une chaîne de traitement en mode dégradé comportant un correcteur direct agencé pour recevoir la consigne de vitesse de rotation et la mesure de vitesse de rotation et déterminer un courant électrique de commande en mode dégradé en fonction de la consigne de vitesse de rotation et de la mesure de vitesse de rotation, et
▪ un module de gestion de mode agencé pour recevoir le signal de défaillance, le courant électrique de commande en mode nominal et le courant électrique de commande en mode dégradé, et pour délivrer à l'actionneur du doseur de carburant le courant électrique de commande en mode nominal en l'absence de réception du signal de défaillance et le courant électrique de commande en mode dégradé en cas de réception du signal de défaillance.

Dans le cadre de la présente invention, un paramètre de vol de l'aéronef correspond par exemple à un nombre de Mach ou à une altitude de l'aéronef. Un paramètre de fonctionnement de la turbomachine correspond par exemple à une température au sein de la turbomachine, par exemple une température des gaz d'échappement ou dans la chambre de combustion, ou à une pression au sein de la turbomachine, par exemple une pression statique en entrée de la chambre de combustion.

Selon une forme particulière de réalisation, le correcteur direct est agencé pour recevoir, en outre, un ou plusieurs paramètres de vol de l'aéronef et/ou un ou plusieurs paramètres de fonctionnement de la turbomachine, le courant électrique de commande en mode dégradé étant déterminé, en outre, en fonction des paramètres de vol de l'aéronef et/ou des paramètres de fonctionnement de la turbomachine. Avantageusement, le correcteur direct peut être agencé pour recevoir un nombre de Mach et une altitude de l'aéronef et déterminer le courant électrique de commande en mode dégradé en fonction de ces paramètres de vol.

Le correcteur direct est par exemple un correcteur proportionnel, un correcteur intégral, un correcteur dérivé ou toute combinaison de ces correcteurs. En particulier, le correcteur direct peut comporter un correcteur de type proportionnel-intégral. Lorsque le correcteur direct reçoit un paramètre de vol de l'aéronef et/ou un paramètre de fonctionnement de la turbomachine, le gain du correcteur proportionnel, la constante d'intégration du correcteur proportionnel et/ou la constante de dérivation du correcteur dérivé peuvent être variables en fonction de ces paramètres.

La chaîne de traitement en mode dégradé peut également être agencée de manière à intégrer un module de protection agencé pour limiter le fonctionnement de la turbomachine dans des plages de fonctionnement nominales, lesquelles correspondent à un asservissement de la turbomachine par la chaîne de traitement en mode nominal, voire dans des plages de fonctionnement réduites.

En particulier, dans un premier mode de réalisation, la chaîne de traitement en mode dégradé comporte, en outre, un limiteur de gradient agencé pour recevoir la consigne de vitesse de rotation et déterminer une consigne de vitesse limitée en accélération. La consigne de vitesse limitée en accélération est déterminée de manière à limiter une vitesse d'évolution de la consigne de vitesse de rotation et est utilisée par le correcteur direct à la place de la consigne de vitesse de rotation. En pratique, la consigne de vitesse limitée en accélération est déterminée de manière à suivre la consigne de vitesse de rotation avec une vitesse d'évolution inférieure ou égale à un seuil d'accélération maximum prédéterminé.

Le limiteur de gradient peut en outre être agencé pour recevoir un ou plusieurs paramètres de vol de l'aéronef et/ou un ou plusieurs paramètres de fonctionnement de la turbomachine, le seuil d'accélération maximum prédéterminé étant alors variable en fonction des paramètres de vol et/ou des paramètres de fonctionnement de la turbomachine.

Dans un deuxième mode de réalisation, la chaîne de traitement en mode dégradé comporte, en outre, un circuit de limitation agencé pour recevoir la consigne de vitesse de rotation, la mesure de vitesse de rotation et un paramètre de fonctionnement de la turbomachine, et déterminer une consigne de vitesse bornée, la consigne de vitesse bornée étant déterminée en calculant une différence entre le paramètre de fonctionnement et un paramètre seuil minimal prédéterminé ou entre le paramètre de fonctionnement et un paramètre seuil maximal prédéterminé, en multipliant ladite différence par un coefficient relatif au paramètre de fonctionnement, en additionnant la mesure de vitesse de rotation au résultat de la multiplication, et en prenant, comme consigne de vitesse bornée, le maximum entre le résultat de l'addition et la consigne de vitesse de rotation lorsque la différence est calculée par rapport à un paramètre seuil minimal, et le minimum entre le résultat de l'addition et la consigne de vitesse de rotation lorsque la différence est calculée par rapport à un paramètre seuil maximal.

En particulier, le circuit de limitation peut être agencé pour recevoir, comme paramètre de fonctionnement, une mesure de pression de la turbomachine, par exemple une mesure de pression statique en entrée de la chambre de combustion, une différence étant calculée entre la mesure de pression et une pression minimale prédéterminée. Alternativement, le circuit de limitation peut être agencé pour recevoir, comme paramètre de fonctionnement, une mesure de température de la turbomachine, par exemple une mesure de température des gaz d'échappement, une différence étant calculée entre la mesure de température et une température maximale prédéterminée.

Le circuit de limitation peut être agencé pour recevoir plusieurs paramètres de fonctionnement de la turbomachine, chaque paramètre de fonctionnement étant comparé à un paramètre seuil minimal ou maximal, comme indiqué précédemment. Dans ce cas, la consigne de vitesse bornée est déterminée comme étant le maximum des différents minima et maxima déterminés pour les paramètres de fonctionnement de la turbomachine.

L'invention a également pour objet une turbomachine pour un aéronef comprenant :
▪ une chambre de combustion,
▪ un doseur de carburant comportant un tiroir doseur dont une position détermine un débit volumique de carburant injecté dans la chambre de combustion et un actionneur agencé pour déplacer le tiroir doseur en fonction d'un courant électrique de commande,
▪ un capteur de position agencé pour mesurer une position du tiroir doseur et délivrer une mesure de position,
▪ un capteur de vitesse agencé pour mesurer une vitesse de rotation de la turbomachine et délivrer une mesure de vitesse de rotation,
▪ une unité de contrôle agencée pour délivrer une consigne de vitesse de rotation, pour détecter une défaillance du capteur de position et pour délivrer un signal de défaillance en cas de détection d'une défaillance du capteur de position, et
▪ un système de commande tel que décrit précédemment.

Selon une forme particulière de réalisation, le capteur de position comprend un premier élément sensible et un deuxième élément sensible, le premier élément sensible étant agencé pour mesurer une position du tiroir doseur et délivrer une première mesure de position, le deuxième élément sensible étant agencé pour mesurer une position du tiroir doseur et délivrer une deuxième mesure de position, l'unité de contrôle étant agencée pour détecter une défaillance du capteur de position en cas d'écart entre la première mesure de position et la deuxième mesure de position supérieur à un seuil prédéterminé ou en l'absence de réception de la première mesure de position et de la deuxième mesure de position.

L'invention a enfin pour objet un procédé de commande pour une turbomachine d'aéronef, la turbomachine comprenant :
▪ une chambre de combustion,
▪ un doseur de carburant comportant un tiroir doseur dont une position détermine un débit volumique de carburant injecté dans la chambre de combustion et un actionneur agencé pour déplacer le tiroir doseur en fonction d'un courant électrique de commande,
▪ un capteur de position agencé pour mesurer une position du tiroir doseur et délivrer une mesure de position,
▪ un capteur de vitesse agencé pour mesurer une vitesse de rotation de la turbomachine et délivrer une mesure de vitesse de rotation, et
▪ une unité de contrôle agencée pour délivrer une consigne de vitesse de rotation, pour détecter une défaillance du capteur de position et pour délivrer un signal de défaillance en cas de détection d'une défaillance du capteur de position.

Selon l'invention, le procédé de commande comprend les étapes consistant à :
▪ surveiller une défaillance du capteur de position,
▪ en l'absence de défaillance du capteur de position,
   □ déterminer une consigne de débit massique de carburant en fonction de la consigne de vitesse de rotation et de la mesure de vitesse de rotation,
   □ convertir la consigne de débit massique de carburant en une consigne de position,
   □ déterminer un courant électrique de commande en mode nominal en fonction de la consigne de position et de la mesure de position, et
   □ délivrer à l'actionneur du doseur de carburant le courant électrique de commande en mode nominal,
▪ en cas de défaillance du capteur de position,
   □ déterminer un courant électrique de commande en mode dégradé en fonction de la consigne de vitesse de rotation et de la mesure de vitesse de rotation, et
   □ délivrer à l'actionneur du doseur de carburant le courant électrique de commande en mode dégradé.

### BRÈVE DESCRIPTION DES DESSINS

D'autres caractéristiques, détails et avantages de l'invention ressortiront à la lecture de la description qui va suivre, donnée uniquement à titre d'exemple et faisant référence aux dessins annexés sur lesquels :
- la figure 1 représente, sous forme synoptique, un exemple de turbomachine d'un aéronef et d'un système de commande à double boucle d'asservissement pour la turbomachine ;
- la figure 2 représente, sous forme synoptique, un exemple de turbomachine d'un aéronef et d'un système de commande selon l'invention pour la turbomachine, ledit système de commande comprenant une chaîne de traitement en mode nominal et une chaîne de traitement en mode dégradé ;

- la figure 3 représente un asservissement réalisé à l'aide de la chaîne de traitement en mode dégradé ;
- la figure 4 représente un module de protection équipant la chaîne de traitement en mode dégradé ;
- la figure 5 représente un exemple de procédé de commande selon l'invention.

### DESCRIPTION DÉTAILLÉE

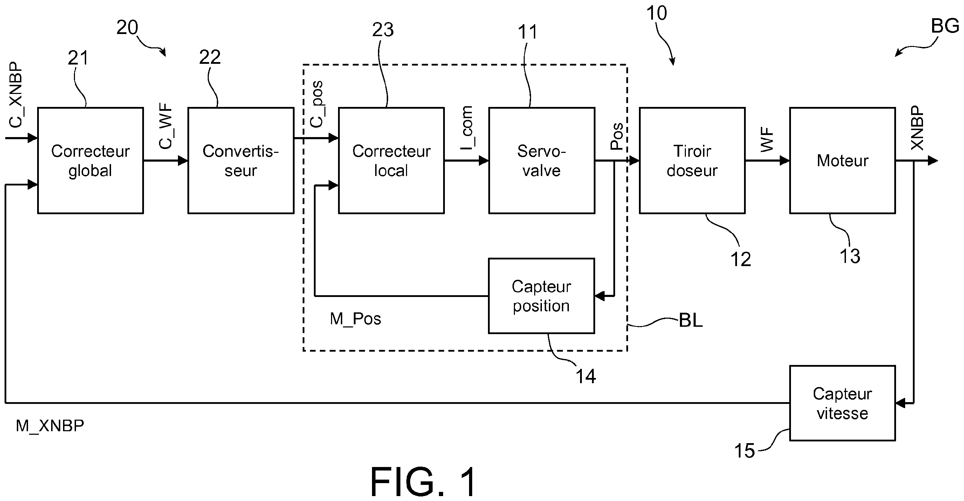

La figure 1 représente, sous forme synoptique, un exemple de turbomachine d'un aéronef et d'un système de commande pour la turbomachine reposant sur une double boucle d'asservissement. La turbomachine 10 comprend notamment une servovalve 11, un tiroir doseur 12, une chambre de combustion et un ensemble d'éléments tournants, désignés globalement par le terme « moteur » 13, un capteur de position 14 et un capteur de vitesse 15. La servovalve 11 et le tiroir doseur 12 forment un doseur de carburant. Le tiroir doseur 12 est agencé pour pouvoir être déplacé dans différentes positions par la servovalve 11, chaque position, notée « Pos » correspondant à un débit volumique de carburant, noté « WF », qui est injecté dans la chambre de combustion. La combustion de ce volume de carburant entraîne en rotation des éléments tournants de la turbomachine, notamment un compresseur et une turbine. Pour une turbomachine à double-corps, les éléments tournants comprennent un corps basse pression et un corps haute pression, chaque corps comprenant un compresseur, une turbine et un arbre de liaison entre le compresseur et la turbine. La vitesse de rotation de l'un des éléments tournants est mesurée par le capteur de vitesse 15. Pour la suite de la description, il est considéré que le capteur de vitesse 15 mesure la vitesse de rotation du corps basse pression XNBP, la mesure étant notée « M_XNBP ». Par ailleurs, la position Pos du tiroir doseur 12 est mesurée par le capteur de position 14, la mesure de position étant notée « M_Pos ». Le capteur de position 14 peut comporter deux éléments sensibles, chaque élément sensible étant agencé pour mesurer la position du tiroir doseur 12 et délivrer une mesure de position. Le capteur de position 14 est par exemple un capteur de type variateur différentiel à variation linéaire, connu sous l'expression anglo-saxonne « Linear Variable Differential Transformer », LVDT.

Le système de commande 20 comprend un correcteur global 21, un convertisseur 22 et un correcteur local 23. Le correcteur global 21 reçoit la mesure de vitesse de rotation M_XNBP et une consigne de vitesse, notée « C_XNBP », fournie par une unité de contrôle de l'aéronef. Cette consigne est par exemple déterminée en fonction de la poussée requise par un pilote de l'aéronef ou un pilote automatique. En fonction de la consigne de vitesse C_XNBP et de la mesure de vitesse de rotation M_XNBP, le correcteur global 21 détermine une consigne de débit massique de carburant, notée « C_WF ». Le convertisseur 22 est agencé pour recevoir cette consigne C_WF et déterminer une consigne de position C_Pos associée pour le tiroir doseur 12. Le convertisseur 22 peut notamment déterminer la consigne de position C_Pos en fonction d'un ou plusieurs paramètres, par exemple une température du carburant en amont du tiroir doseur 12. La consigne de position C_Pos est délivrée au correcteur local 23, qui reçoit également la mesure de position M_Pos. Le correcteur local 23 est agencé pour déterminer un courant électrique de commande I_com en fonction de la consigne de position C_Pos et de la mesure de position M_Pos. Lorsque le capteur de position 14 fournit plusieurs mesures de position, le correcteur local 23 considère par exemple une valeur moyenne des mesures de position. Le courant électrique de commande I_com est délivré à la servovalve 11, de sorte que son actionnement déplace le tiroir doseur dans la position souhaitée. Le correcteur global 21 et le correcteur local 23 sont par exemple des correcteurs PID (proportionnel, intégral, dérivée).

Le système de commande 20 comporte ainsi une double boucle d'asservissement, à savoir une boucle locale BL, formée par le correcteur local 23, la servovalve 11 et le capteur de position 14, et une boucle globale BG, formée par le correcteur global 21, le convertisseur 22, le correcteur local 23, la servovalve 11, le capteur de position 14, le tiroir doseur 12, le moteur 13 et le capteur de vitesse 15. Il ressort de cet agencement qu'en cas d'absence de réception de la mesure de position M_Pos par le correcteur local 23, ou d'écart important entre les mesures de position par plusieurs éléments sensibles, la boucle locale BL n'est plus opérationnelle, ce qui conduit également à empêcher le fonctionnement de la boucle globale BG. En l'absence de tout asservissement, la turbomachine est arrêtée automatiquement ou manuellement.

Afin d'éviter une perte de commande de la turbomachine, et donc de la turbomachine elle-même, l'invention propose un système de commande comprenant, en plus de la double boucle d'asservissement décrite ci-dessus, une boucle d'asservissement de la vitesse de rotation de la turbomachine qui s'affranchit de la mesure de position M_Pos et qui peut être utilisée en cas d'indisponibilité ou de défaillance de cette mesure de position M_Pos. Cette boucle d'asservissement est appelée « boucle de défaillance en mode dégradé ».

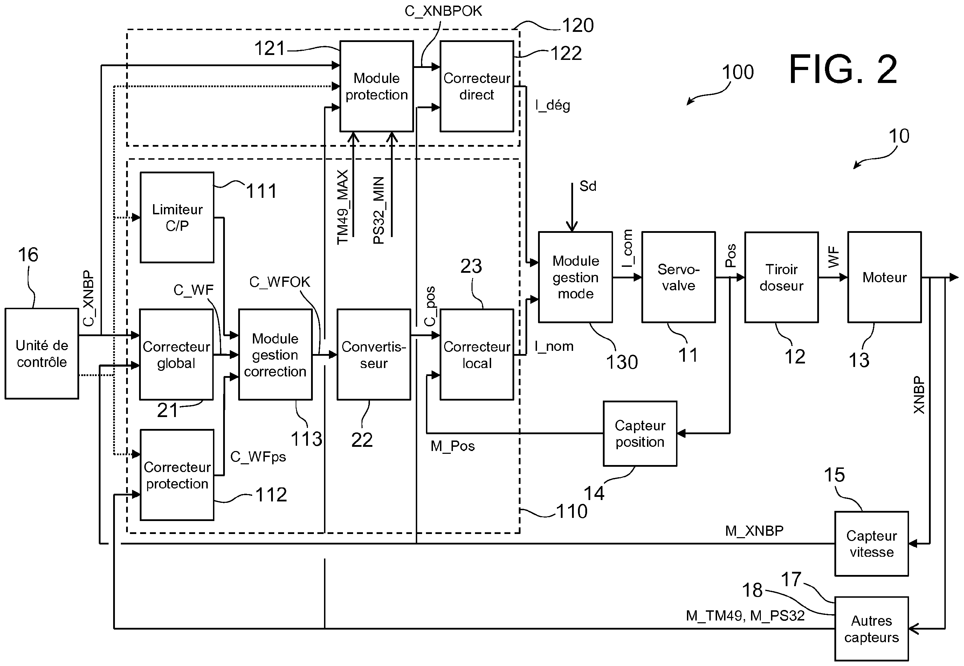

La figure 2 représente, sous forme synoptique, un exemple de turbomachine d'un aéronef et d'un système de commande selon l'invention pour la turbomachine. La turbomachine 10 comprend, comme la turbomachine de la figure 1, une servovalve 11, un tiroir doseur 12, un moteur 13 comportant une chambre de combustion et des éléments tournants, un capteur de position 14 et un capteur de vitesse 15. En outre, la turbomachine 10 comprend une unité de contrôle 16, un capteur de température 17 agencé pour mesurer une température au sein de la turbomachine et un capteur de pression 18 agencé pour mesurer une pression au sein de la turbomachine. L'unité de contrôle 16 est agencée pour fournir la consigne de vitesse C_XNBP et divers paramètres de vol et/ou de fonctionnement de la turbomachine 10, comme indiqué ci-après. Dans cet exemple de réalisation, le capteur de température 17 est agencé pour déterminer une mesure de température des gaz d'échappement M_TM49 et le capteur de pression 18 est agencé pour déterminer une mesure de pression statique en entrée de la chambre de combustion M_PS32. Le capteur de température 17 pourrait néanmoins mesurer toute autre température de la turbomachine nécessaire à sa régulation. Le système de commande 100 comprend une chaîne de traitement en mode nominal 110, une chaîne de traitement en mode dégradé 120 et un module de gestion de mode 130.

La chaîne de traitement en mode nominal 110 comporte, de manière identique au système de commande 20 de la figure 1, un correcteur global 21, un convertisseur 22 et un correcteur local 23. De plus, il comporte un limiteur C/P 111, un correcteur de protection 112 et un module de gestion de correction 113. Le limiteur C/P 111 reçoit, en provenance de l'unité de contrôle 16, des paramètres de vol et des paramètres de fonctionnement de la turbomachine, et détermine des bornes minimale et maximale de débit de carburant en fonction de ces paramètres. Les paramètres de vol comprennent par exemple un nombre de Mach et une altitude de l'aéronef et les paramètres de fonctionnement de la turbomachine comprennent par exemple une mesure de température des gaz d'échappement M_TM49 et une mesure de pression statique en entrée de la chambre de combustion M_PS32. Le correcteur de protection 112 reçoit également des paramètres de vol et des paramètres de fonctionnement de la turbomachine. À partir de ces paramètres, le correcteur de protection 112 calcule une consigne de débit massique de carburant C_WFps permettant de respecter des paramètres seuils, par exemple une température maximale de gaz d'échappement TM49_MAX et une pression statique minimale en entrée de la chambre de combustion PS32_MIN. Bien entendu, d'autres paramètres peuvent être pris en compte par le correcteur de protection 112. En pratique, le correcteur de protection 112 peut comporter un correcteur de protection individuel pour chaque paramètre à surveiller. Le correcteur global 21 détermine la consigne de débit massique de carburant C_WF en fonction de la consigne de vitesse C_XNBP et de la mesure de vitesse de rotation M_XNBP. Les consignes de débit massique de carburant C_WF et C_WFps, et les bornes minimales et maximales de débit de carburant sont fournies au module de gestion de correction 113, lequel vérifie que la consigne de débit massique de carburant C_WF est conforme aux bornes minimale et maximale de débit de carburant et à la consigne C_WFps, et fournit en sortie une consigne de débit massique de carburant seuillée C_WFOK. Ladite consigne C_WFOK est convertie par le convertisseur 22 en une consigne de position C_Pos pour le tiroir doseur 12. De manière analogue au système de commande de la figure 1, la consigne de position C_Pos est fournie au correcteur local 23 afin de réaliser un asservissement sur la position du tiroir doseur 12. Le correcteur local 23 détermine un courant électrique de commande en mode nominal I_nom qui correspond, en l'absence d'action du limiteur C/P 111 et du correcteur de protection 112, au courant électrique de commande I_com du système de commande 20.

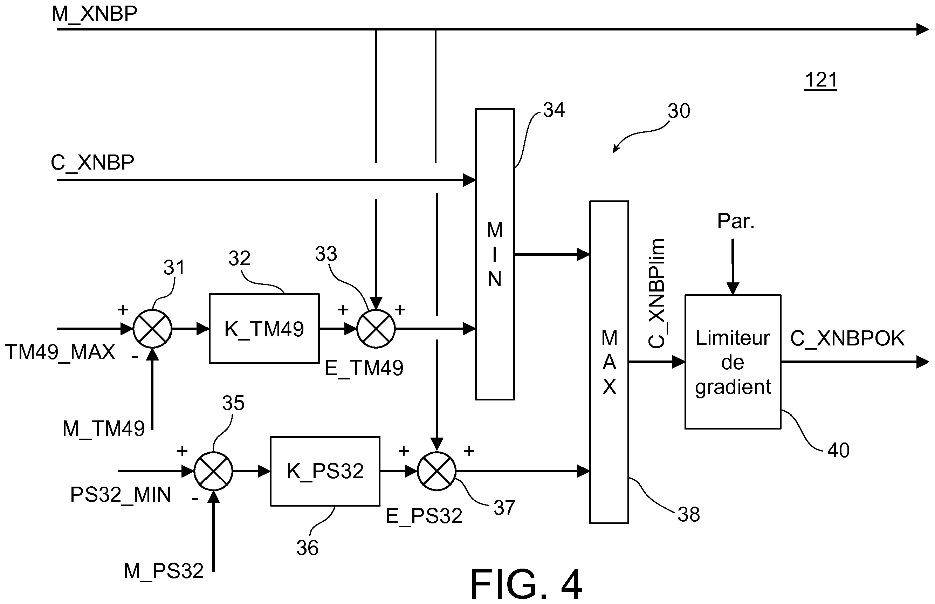

La chaîne de traitement en mode dégradé 120 comporte un module de protection 121 et un correcteur direct 122. Le module de protection 121 est agencé pour remplir des fonctions analogues à celles du limiteur C/P 111 et du correcteur de protection 112. Il reçoit des paramètres de vol et des paramètres de fonctionnement de la turbomachine 10 en provenance de l'unité de contrôle 16, du capteur de température 17 et du capteur de pression 18. Le module de protection 121 reçoit en outre la consigne de vitesse C_XNBP et détermine une consigne de vitesse saine C_XNBPOK. Un exemple de réalisation du module de protection 121 sera décrit en détail en référence à la figure 4. Le correcteur direct 122 reçoit la consigne de vitesse saine C_XNBPOK et la mesure de vitesse de rotation M_XNBP, et détermine un courant électrique de commande en mode dégradé I_dég en fonction de cette consigne de vitesse saine C_XNBPOK et de cette mesure de vitesse de rotation M_XNBP. Le correcteur direct 122 est par exemple un correcteur PI (proportionnel, intégrale).

Le module de gestion de mode 130 reçoit le courant électrique de commande en mode nominal I_nom et le courant électrique de commande en mode dégradé I_dég et délivre un courant électrique de commande I_com pour la servovalve 11. Le module de gestion de mode 130 est agencé pour délivrer, comme courant électrique de commande I_com, le courant électrique de commande en mode nominal I_nom en l'absence de défaillance dans la mesure de position du tiroir doseur 12, et le courant électrique de commande en mode dégradé I_dég en cas de défaillance. À cet effet, le module de gestion de mode peut recevoir un signal de défaillance Sd généré en cas de défaillance du capteur de position 14. Le signal de défaillance Sd est par exemple généré par l'unité de contrôle 16. Alternativement, le module de gestion de mode 130 peut recevoir la mesure de position de chacun des éléments sensibles du capteur de position 14 et en déduire une défaillance, notamment en cas d'écart entre les deux mesures de position. Ainsi, en fonction du courant électrique de commande sélectionné par le module de gestion de mode, le système de commande 100 effectue un asservissement de la vitesse de rotation XNBP soit à l'aide de la chaîne de traitement en mode nominal 110, soit à l'aide de la chaîne de traitement en mode dégradé 120. En l'espèce, lorsque le courant électrique de commande en mode nominal I_nom est sélectionné, un asservissement local est effectué à travers le correcteur local 23, la servovalve 11 et le capteur de position 14, et un asservissement global est effectué de manière concomitante par le correcteur global 21, le convertisseur 22, le correcteur local 23, la servovalve 11, le tiroir doseur 12, le moteur 13 et le capteur de vitesse 15.

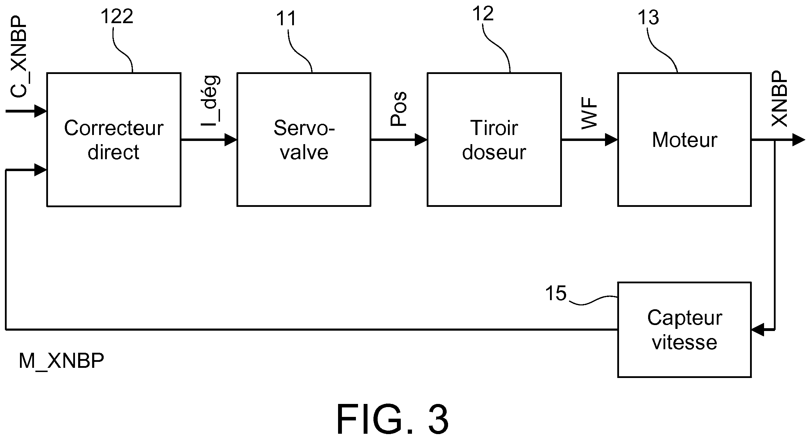

La figure 3 représente l'asservissement réalisé à l'aide de la chaîne de traitement en mode dégradé 120 lorsque le courant électrique de commande en mode dégradé I_dég est sélectionné. Une unique boucle d'asservissement est formée par le correcteur direct 122, la servovalve 11, le tiroir doseur 12, le moteur 13 et le capteur de vitesse 15. L'asservissement peut être qualifié de « direct » dans la mesure où il n'est pas fait appel à la mesure de position M_Pos du tiroir doseur 12. Il est à noter que le correcteur direct 122 peut recevoir directement la consigne de vitesse C_XNBP, comme représenté sur la figure 3, en l'absence de module de protection 121.

La figure 4 représente le module de protection 121 de la chaîne de traitement en mode dégradé 120. Le module de protection 121 comprend un circuit de limitation 30 et un limiteur de gradient 40. Le circuit de limitation 30 comprend un premier soustracteur 31, un premier amplificateur 32, un premier additionneur 33, un opérateur MIN 34, un deuxième soustracteur 35, un deuxième amplificateur 36, un deuxième additionneur 37 et un opérateur MAX 38. Il est agencé pour recevoir la consigne de vitesse de rotation C_XNBP, la mesure de vitesse de rotation M_XNBP, la mesure de température des gaz d'échappement M_TM49 et la mesure de pression statique en entrée de la chambre de combustion M_PS32, et pour délivrer une consigne de vitesse bornée C_XNBPlim. Le soustracteur 31 soustrait la mesure de température des gaz d'échappement M_TM49 d'une température maximale TM49_MAX (TM49_MAX - M_TM49); l'amplificateur 32 calcule une valeur E_TM49 en multipliant le résultat de la soustraction par un coefficient de température K_TM49 (E_TM49 = K_TM49 × (TM49_MAX - M_TM49)); l'additionneur 33 additionne le résultat de cette multiplication à la mesure de vitesse de rotation M_XNBP: K_TM49 × (TM49_MAX - M_TM49) + M_XNBP; et l'opérateur MIN 34 compare le résultat de cette addition à la consigne de vitesse de rotation C_XNBP et retient la valeur minimale. En parallèle, le soustracteur 35 soustrait la mesure de pression M_PS32 d'une pression minimale PS32_MIN (PS32_MIN - M_PS32) ; l'amplificateur 36 calcule une valeur E_PS32 en multipliant le résultat de la soustraction par un coefficient de pression K_PS32 (E_PS32 = K_PS32 × (PS32_MIN - M_PS32)) ; l'additionneur 37 additionne le résultat de cette multiplication à la mesure de vitesse de rotation M_XNBP (K_PS32 × (PS32_MIN - M_PS32) + M_XNBP) ; et l'opérateur MAX 38 compare le résultat de cette addition à la valeur minimale retenue par l'opérateur MIN 34 et retient la valeur maximale. Cette valeur maximale correspond à la consigne de vitesse bornée C_XNBPlim.

Le circuit de limitation 30 permet d'éviter à la turbomachine 10 de fonctionner avec une température de gaz d'échappement supérieure à la température maximale TM49_MAX et/ou avec une pression statique en entrée de la chambre de combustion inférieure à la pression minimale PS32_MIN. En effet, lorsque la mesure de température M_TM49 se rapproche de la température maximale TM49_MAX, la somme de la valeur E_TM49 et de la mesure de vitesse de rotation M_XNBP (E_TM49 + M_XNBP) devient inférieure à la consigne de vitesse de rotation C_XNBP. C'est alors cette somme qui est utilisée comme consigne de vitesse bornée C_XNBPlim à la place de la consigne de vitesse de rotation C_XNBP. Il peut être remarqué que si la mesure de température M_TM49 est égale à la température maximale TM49_MAX, la consigne de vitesse bornée C_XNBPlim est égale à la mesure de vitesse de rotation M_XNBP. De même, lorsque la mesure de pression M_PS32 se rapproche de la pression minimale PS32_MIN, la somme de la valeur E_PS32 et de la mesure de vitesse de rotation M_XNBP devient supérieure à la consigne de vitesse de rotation C_XNBP. C'est alors cette somme qui est utilisée comme consigne de vitesse bornée C_XNBPlim à la place de la consigne de vitesse de rotation C_XNBP. Dans cet exemple de réalisation, seuls deux opérateurs 34, 38 sont utilisés. Néanmoins, le résultat de l'addition en sortie de l'additionneur 37 pourrait être comparé à la consigne de vitesse de rotation C_XNBP par un premier opérateur MAX, un deuxième opérateur MAX comparant les valeurs issues de ce premier opérateur MAX et de l'opérateur MIN 34. Par ailleurs, plus de deux paramètres peuvent être pris en compte pour déterminer la consigne de vitesse bornée C_XNBPlim. Dans ce cas, chacun de ces paramètres est comparé à un paramètre seuil minimal ou maximal, comme décrit pour la pression PS32 et la température TM49. La consigne C_XNBPlim résulte alors du maximum des valeurs issues des différents opérateurs associés chacun à un paramètre.

Le limiteur de gradient 40 reçoit la consigne de vitesse bornée C_XNBPlim et détermine une consigne de vitesse limitée en accélération, correspondant à la consigne de vitesse saine C_XNBPOK. Cette consigne de vitesse limitée en accélération C_XNBPOK est déterminée de manière à suivre la consigne de vitesse bornée C_XNBPlim avec une vitesse d'évolution inférieure ou égale à un seuil d'accélération maximum prédéterminé. Le limiteur de gradient 40 permet ainsi de ralentir la dynamique de la turbomachine et d'éviter d'engendrer des rapports de débit de carburant sur pression sortant des plages de fonctionnement nominales. Le limiteur de gradient 40 peut recevoir un ou plusieurs paramètres de vol de l'aéronef et/ou un ou plusieurs paramètres de fonctionnement de la turbomachine, et adapter le seuil d'accélération maximum en fonction de ces paramètres. En particulier, le seuil d'accélération maximum peut être variable en fonction du nombre de Mach et de l'altitude de l'aéronef, ainsi que de la pression statique en amont de la chambre de combustion PS32.

Le coefficient de température K_TM49 peut être déterminé en comparant, à l'aide d'un modèle de turbomachine, les effets d'une augmentation de la vitesse de rotation XNBP sur la température des gaz d'échappement TM49. Le coefficient de pression K_PS32 peut être déterminé de manière analogue. Le seuil d'accélération maximum prédéterminé du limiteur de gradient 40 peut être déterminé à l'aide d'une simulation d'un modèle de turbomachine régulé à l'aide de la chaîne de traitement en mode nominal. Il peut correspondre à l'accélération à partir de laquelle le débit de carburant dépasse la borne maximale du limiteur C/P 111.

Le système de commande 100 peut présenter une architecture purement matérielle, ou une architecture logicielle apte à exécuter un programme informatique. Il s'agit par exemple d'un réseau prédiffusé programmable par l'utilisateur (FPGA), d'un processeur, d'un microprocesseur, ou d'un microcontrôleur. Par ailleurs, la configuration fonctionnelle des éléments du système de commande 100 ne limite en rien la configuration matérielle de ces éléments. Ainsi, à titre d'exemple, deux éléments présentés comme étant distincts peuvent en pratique être formés par un même composant électrique ou électronique, ou leurs fonctions exécutées par un même processeur.

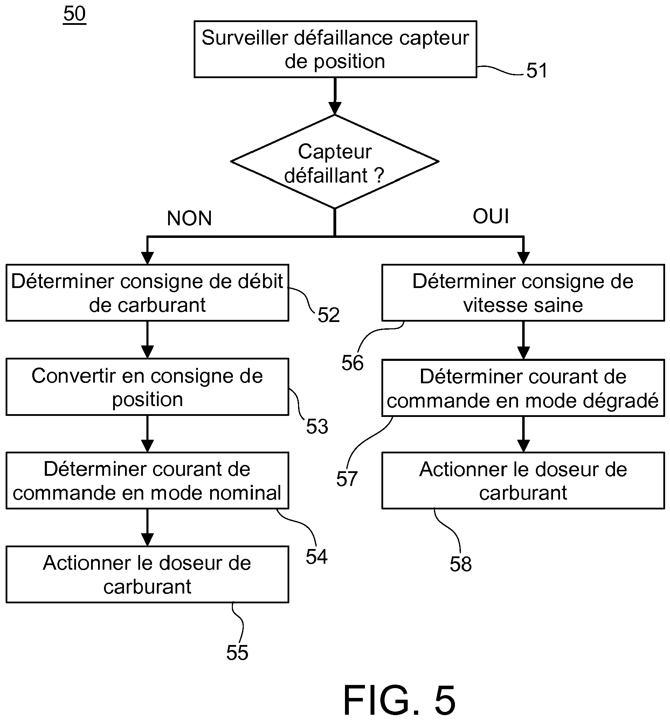

La figure 5 représente un exemple de procédé de commande mettant en œuvre la turbomachine et le système de commande de la figure 2. Le procédé 50 comprend une étape 51 de surveillance dans laquelle une défaillance du capteur de position 14 est surveillée. Cette étape 51 de surveillance est de préférence effectuée en continu ou à intervalles de temps réguliers. Elle consiste par exemple à déterminer une absence de mesure de position ou un écart entre deux mesures de position supérieur à un seuil prédéterminé. En l'absence de défaillance du capteur de position 14, le procédé continue vers une étape 52 de détermination d'une consigne de débit de carburant. Dans cette étape 52, une consigne de débit massique de carburant C_WF est déterminée en fonction de la consigne de vitesse de rotation C_XNBP et de la mesure de vitesse de rotation M_XNBP. L'étape 52 est réalisée par le correcteur global 21, le limiteur C/P 111, le correcteur de protection 112 et le module de gestion de correction 113. Ensuite, dans une étape 53 de conversion, la consigne de débit massique de carburant C_WF est convertie en une consigne de position C_Pos. Cette étape 53 est réalisée par le convertisseur 22. Dans une étape 54 de détermination d'un courant de commande en mode nominal, un courant électrique de commande en mode nominal I_nom est déterminé en fonction de la consigne de position C_Pos et de la mesure de position M_Pos. Dans une étape 55 d'actionnement, le courant électrique de commande en mode nominal I_nom est délivré à la servovalve 11 de manière à déplacer le tiroir doseur 12 dans la position souhaitée. Lorsque, au cours de l'étape 51 de surveillance, une défaillance du capteur de position 14 est détectée, le procédé bascule vers une étape 56 de détermination d'une consigne de vitesse saine. Cette étape 56 est réalisée par le module de protection 121. Elle consiste à déterminer la consigne de vitesse saine C_XNBPOK à partir de la consigne de vitesse de rotation C_XNBP, de paramètres de vol et de paramètres de fonctionnement de la turbomachine. Le procédé de commande comporte ensuite une étape 57 de détermination d'un courant de commande en mode dégradé. Dans cette étape 57, réalisée par la chaîne de traitement en mode dégradé 120, un courant électrique de commande en mode dégradé I_dég est déterminé en fonction de la consigne de vitesse saine C_XNBPOK et de la mesure de vitesse de rotation M_XNBP. Ensuite, dans une étape 58 d'actionnement, le courant électrique de commande en mode dégradé I_dég est délivré à la servovalve 11 de manière à déplacer le tiroir doseur 12 dans la position souhaitée.

## Revendications

1. Système de commande pour une turbomachine d'aéronef, la turbomachine (10) comprenant :
▪ une chambre de combustion (13),
▪ un doseur de carburant comportant un tiroir doseur (12) dont une position détermine un débit volumique de carburant injecté dans la chambre de combustion et un actionneur (11) agencé pour déplacer le tiroir doseur en fonction d'un courant électrique de commande (I_com),
▪ un capteur de position (14) agencé pour mesurer une position du tiroir doseur et délivrer une mesure de position (M_Pos),
▪ un capteur de vitesse (15) agencé pour mesurer une vitesse de rotation de la turbomachine et délivrer une mesure de vitesse de rotation (M_XNBP), et
▪ une unité de contrôle (16) agencée pour délivrer une consigne de vitesse de rotation (C_XNBP), pour détecter une défaillance du capteur de position et pour délivrer un signal de défaillance (Sd) en cas de détection d'une défaillance du capteur de position,
le système de commande (100) comprenant :
▪ une chaîne de traitement en mode nominal (110) comportant :
□ un correcteur global (21) agencé pour recevoir la consigne de vitesse de rotation (C_XNBP) et la mesure de vitesse de rotation (M_XNBP) et déterminer une consigne de débit massique de carburant (C_WF) en fonction de la consigne de vitesse de rotation (C_XNBP) et de la mesure de vitesse de rotation (M_XNBP),
□ un convertisseur (22) agencé pour convertir la consigne de débit massique de carburant (C_WF) en une consigne de position (C_Pos), et
□ un correcteur local (23) agencé pour recevoir la consigne de position (C_Pos) et la mesure de position (M_Pos) et déterminer un courant électrique de commande en mode nominal (I_nom) en fonction de la consigne de position (C_Pos) et de la mesure de position (M_Pos),
▪ une chaîne de traitement en mode dégradé (120) comportant un correcteur direct (122) agencé pour recevoir la consigne de vitesse de rotation (C_XNBP) et la mesure de vitesse de rotation (M_XNBP) et déterminer un courant électrique de commande en mode dégradé (I_dég) en fonction de la consigne de vitesse de rotation (C_XNBP) et de la mesure de vitesse de rotation (M_XNBP), et
▪ un module de gestion de mode (130) agencé pour recevoir le signal de défaillance (Sd), le courant électrique de commande en mode nominal (I_nom) et le courant électrique de commande en mode dégradé (I_dég), et pour délivrer à l'actionneur (11) du doseur de carburant le courant électrique de commande en mode nominal (I_nom) en l'absence de réception du signal de défaillance et le courant électrique de commande en mode dégradé (I_dég) en cas de réception du signal de défaillance.

2. Système de commande selon la revendication 1, dans lequel le correcteur direct (122) est agencé pour recevoir, en outre, un ou plusieurs paramètres de vol de l'aéronef et/ou un ou plusieurs paramètres de fonctionnement de la turbomachine, le courant électrique de commande en mode dégradé (I_dég) étant déterminé, en outre, en fonction des paramètres de vol de l'aéronef et/ou des paramètres de fonctionnement de la turbomachine.

3. Système de commande selon l'une des revendications 1 et 2, dans lequel la chaîne de traitement en mode dégradé (120) comporte, en outre, un limiteur de gradient (40) agencé pour recevoir la consigne de vitesse de rotation (C_XNBP) et déterminer une consigne de vitesse limitée en accélération (C_XNBPOK), la consigne de vitesse limitée en accélération étant déterminée de manière à limiter une vitesse d'évolution de la consigne de vitesse de rotation, la consigne de vitesse limitée en accélération (C_XNBPOK) étant utilisée par le correcteur direct (122) à la place de la consigne de vitesse de rotation (C_XNBP).

4. Système de commande selon la revendication 3, dans lequel le limiteur de gradient (40) est en outre agencé pour recevoir un ou plusieurs paramètres de vol de l'aéronef et/ou un ou plusieurs paramètres de fonctionnement de la turbomachine, le seuil d'accélération maximum prédéterminé étant variable en fonction des paramètres de vol et/ou des paramètres de fonctionnement de la turbomachine.

5. Système de commande selon l'une des revendications 1 à 4, dans lequel la chaîne de traitement en mode dégradé (120) comporte, en outre, un circuit de limitation (30) agencé pour recevoir la consigne de vitesse de rotation (C_XNBP), la mesure de vitesse de rotation (M_XNBP) et un paramètre de fonctionnement de la turbomachine (M_TM49, M_PS32), et déterminer une consigne de vitesse bornée (C_XNBPlim), la consigne de vitesse bornée (C_XNBPlim) étant déterminée en calculant une différence entre le paramètre de fonctionnement (M_PS32) et un paramètre seuil minimal prédéterminé (PS32_MIN) ou entre le paramètre de fonctionnement (M_TM49) et un paramètre seuil maximal prédéterminé (TM49_MAX), en multipliant ladite différence par un coefficient relatif au paramètre de fonctionnement (K_TM49, K_PS32), en additionnant la mesure de vitesse de rotation (M_XNBP) au résultat de la multiplication, et en prenant, comme consigne de vitesse bornée (C_XNBPlim), le maximum entre le résultat de l'addition et la consigne de vitesse de rotation lorsque la différence est calculée par rapport à un paramètre seuil minimal, et le minimum entre le résultat de l'addition et la consigne de vitesse de rotation lorsque la différence est calculée par rapport à un paramètre seuil maximal.

6. Système de commande selon la revendication 5, dans lequel le circuit de limitation (30) est agencé pour recevoir, comme paramètre de fonctionnement, une mesure de pression de la turbomachine (M_PS32), une différence étant calculée entre la mesure de pression et une pression minimale prédéterminée (PS32_MIN), et/ou le circuit de limitation (30) est agencé pour recevoir, comme paramètre de fonctionnement, une mesure de température de la turbomachine (TM_49), une différence étant calculée entre la mesure de température et une température maximale prédéterminée (TM49_MAX).

7. Turbomachine pour un aéronef comprenant :
▪ une chambre de combustion (13),
▪ un doseur de carburant comportant un tiroir doseur (12) dont une position détermine un débit volumique de carburant injecté dans la chambre de combustion et un actionneur (11) agencé pour déplacer le tiroir doseur en fonction d'un courant électrique de commande (I_com),
▪ un capteur de position (14) agencé pour mesurer une position du tiroir doseur et délivrer une mesure de position (M_Pos),
▪ un capteur de vitesse (15) agencé pour mesurer une vitesse de rotation de la turbomachine et délivrer une mesure de vitesse de rotation (M_XNBP),
▪ une unité de contrôle (16) agencée pour délivrer une consigne de vitesse de rotation (C_XNBP), pour détecter une défaillance du capteur de position et pour délivrer un signal de défaillance (Sd) en cas de détection d'une défaillance du capteur de position, et
▪ un système de commande (100) selon l'une des revendications 1 à 6.

8. Turbomachine selon la revendication 7, dans laquelle le capteur de position (14) comprend un premier élément sensible et un deuxième élément sensible, le premier élément sensible étant agencé pour mesurer une position du tiroir doseur et délivrer une première mesure de position, le deuxième élément sensible étant agencé pour mesurer une position du tiroir doseur et délivrer une deuxième mesure de position, l'unité de contrôle (16) étant agencée pour détecter une défaillance du capteur de position en cas d'écart entre la première mesure de position et la deuxième mesure de position supérieur à un seuil prédéterminé ou en l'absence de réception de la première mesure de position et de la deuxième mesure de position.

9. Procédé de commande pour une turbomachine d'aéronef, la turbomachine (10) comprenant :
▪ une chambre de combustion (13),
▪ un doseur de carburant comportant un tiroir doseur (12) dont une position détermine un débit volumique de carburant injecté dans la chambre de combustion et un actionneur (11) agencé pour déplacer le tiroir doseur en fonction d'un courant électrique de commande (I_com),
▪ un capteur de position (14) agencé pour mesurer une position du tiroir doseur et délivrer une mesure de position (M_Pos),
▪ un capteur de vitesse (15) agencé pour mesurer une vitesse de rotation de la turbomachine et délivrer une mesure de vitesse de rotation (M_XNBP), et
▪ une unité de contrôle (16) agencée pour délivrer une consigne de vitesse de rotation (C_XNBP), pour détecter une défaillance du capteur de position et pour délivrer un signal de défaillance (Sd) en cas de détection d'une défaillance du capteur de position,
le procédé de commande comprenant les étapes consistant à :
▪ surveiller (51) une défaillance du capteur de position (14),
▪ en l'absence de défaillance du capteur de position,
□ déterminer (52) une consigne de débit massique de carburant (C_WF) en fonction de la consigne de vitesse de rotation (C_XNBP) et de la mesure de vitesse de rotation (M_XNBP),
□ convertir (53) la consigne de débit massique de carburant (C_WF) en une consigne de position (C_Pos),
□ déterminer (54) un courant électrique de commande en mode nominal (54) en fonction de la consigne de position (C_Pos) et de la mesure de position (M_Pos), et
□ délivrer (55) à l'actionneur (11) du doseur de carburant le courant électrique de commande en mode nominal (I_nom),
▪ en cas de défaillance du capteur de position,
□ déterminer (57) un courant électrique de commande en mode dégradé (I_dég) en fonction de la consigne de vitesse de rotation (C_XNBP) et de la mesure de vitesse de rotation (M_XNBP), et
□ délivrer (58) à l'actionneur (11) du doseur de carburant le courant électrique de commande en mode dégradé (I_dég).

## Patentansprüche

1. Steuerungssystem für ein Flugzeugtriebwerk, wobei das Triebwerk (10) Folgendes aufweist:
• eine Brennkammer (13),
• eine Treibstoffdosiereinrichtung mit einem Dosierschieber (12), dessen Position einen Volumenstrom von in die Brennkammer eingespritztem Treibstoff bestimmt, und einem Aktuator (11) zum Verschieben des Dosierschiebers in Abhängigkeit eines elektrischen Steuerstroms (I_com),
• einen Positionssensor (14) zum Messen einer Position des Dosierschiebers und zum Ausgeben einer Positionsmessung (M_Pos),
• einen Geschwindigkeitssensor (15) zum Messen einer Drehzahl des Triebwerks und zum Ausgeben einer Drehzahlmessung (M_XNBP), sowie
• eine Steuereinheit (16) zum Ausgeben eines Drehzahlsollwerts (C_XNBP), um einen Fehler des Positionssensors zu erfassen und um ein Fehlersignal (Sd) auszugeben, wenn ein Fehler des Positionssensors erfasst wird,
wobei das Steuerungssystem (100) Folgendes aufweist:
• eine Prozesskette im Normalbetrieb (110), mit:
∘ einer allgemeinen Korrektureinrichtung (21) zum Aufnehmen des Drehzahl-Sollwerts (C-XNBP) und der Drehzahlmessung (M_XNBP) sowie zum Bestimmen eines Sollwerts für den Treibstoffmassenstrom (C_WF) in Abhängigkeit des Drehzahl-Sollwerts (C_XNBP) und der Drehzahlmessung (M_XNBP),
∘ einem Wandler (22) zum Umwandeln des Sollwerts für den Treibstoffmassenstrom (C_WF) in einen Positionssollwert (C_Pos), sowie
∘ einer lokalen Korrektureinrichtung (23) zum Aufnehmen des Positionssollwerts (C_Pos) und der Positionsmessung (M_Pos) sowie zum Bestimmen eines elektrischen Steuerstroms im Normalbetrieb (I_nom) in Abhängigkeit des Positionssollwerts (C_Pos) und der Positionsmessung (M_Pos),
• eine Prozesskette im Notbetrieb (120) mit einer unmittelbaren Korrektureinrichtung (122) zum Aufnehmen des Drehzahlsollwerts (C_XNBP) und der Drehzahlmessung (M_XNBP) und zum Bestimmen eines elektrischen Steuerstroms im Notbetrieb (I_dég) in Abhängigkeit des Drehzahlsollwerts (C_XNBP) und der Drehzahlmessung (M_XNBP), sowie
• ein Modul für die Verwaltung der Betriebsart (130), das so ausgeführt ist, dass es das Fehlersignal (Sd), den elektrischen Steuerstrom im Normalbetrieb (I_nom) und den elektrischen Steuerstrom im Notbetrieb (I_dég) aufnimmt und den elektrischen Steuerstrom im Normalbetrieb (I_nom), wenn kein Fehlersignal empfangen wurde, und den elektrischen Steuerstrom im Notbetrieb (I_dég), wenn das Fehlersignal empfangen wurde, an den Aktuator (11) der Treibstoffdosiereinrichtung abgibt.

2. Steuerungssystem nach Anspruch 1, wobei die unmittelbare Korrektureinrichtung (122) dazu ausgebildet ist, weiterhin einen oder mehrere Flugparameter des Flugzeuges sowie einen oder mehrere Betriebsparameter des Triebwerks aufzunehmen, wobei der elektrische Steuerstrom im Notbetrieb (I_dég) weiterhin in Abhängigkeit der Flugparameter des Flugzeuges und/oder der Betriebsparameter des Triebwerks bestimmt wird.

3. Steuerungssystem nach einem der Ansprüche 1 und 2, wobei die Prozesskette im Notbetrieb (120) weiterhin einen Steigungsbegrenzer (40) zum Aufnehmen des Drehzahlsollwertes (C_XNBP) und Bestimmen eines Sollwerts für die beschleunigungsbegrenzte Geschwindigkeit (C_XNBPOK) aufweist, wobei der Sollwert für die beschleunigungsbegrenzte Geschwindigkeit derart bestimmt wird, dass eine Änderungsgeschwindigkeit des Drehzahlsollwerts begrenzt wird, wobei der Sollwert für die beschleunigungsbegrenzte Geschwindigkeit (C_XNBPOK) von der unmittelbaren Korrektureinrichtung (122) anstelle des Drehzahlsollwerts (C_XNBP) verwendet wird.

4. Steuerungssystem nach Anspruch 3, wobei der Steigungsbegrenzer (40) weiterhin dazu ausgebildet ist, einen oder mehrere Flugparameter des Flugzeugs und/oder einen oder mehrere Betriebsparameter des Triebwerks aufzunehmen, wobei die vorgegebene Beschleunigungsobergrenze in Abhängigkeit der Flugparameter und/oder der Betriebsparameter des Triebwerks veränderlich ist.

5. Steuerungssystem nach einem der Ansprüche 1 bis 4, wobei die Prozesskette im Notbetrieb (120) weiterhin eine Begrenzungsschaltung (30) zum Aufnehmen des Drehzahlsollwerts (C_XNBP), der Drehzahlmessung (M_XNBP) und eines Betriebsparameters des Triebwerks (M_TM49, M_PS32) sowie zum Bestimmen eines begrenzten Geschwindigkeitssollwerts (C_XNBPlim) aufweist, wobei der begrenzte Geschwindigkeitssollwert (C_XNBPlim) durch Berechnung einer Differenz zwischen dem Betriebsparameter (M_PS32) und einem Parameter mit vorgegebener Untergrenze (PS32_MIN) oder zwischen dem Funktionsparameter (M_TM49) und einem Parameter mit vorgegebener Obergrenze (TM49_MAX) bestimmt wird, indem diese Differenz mit einem Koeffizienten bezüglich des Betriebsparameters (K_TM49, K_PS32) multipliziert wird, indem die Drehzahlmessung (M_XNBP) zu dem Multiplikationsergebnis addiert wird, und indem als begrenzter Geschwindigkeitssollwert (C_XNBPlim) der höchste Wert zwischen dem Additionsergebnis und dem Drehzahlsollwert, wenn die Differenz bezüglich einem Untergrenzenparameter berechnet wird, und der geringste Wert zwischen dem Additionsergebnis und dem Drehzahlsollwert angenommen wird, wenn die Differenz bezüglich einem Obergrenzenparameter berechnet wird.

6. Steuerungssystem nach Anspruch 5, wobei die Begrenzungsschaltung (30) so ausgebildet ist, dass sie als Betriebsparameter eine Druckmessung des Triebwerks (M_PS32) aufnimmt, wobei eine Differenz zwischen der Druckmessung und einem vorgegebenen Mindestdruck (PS32_MIN) berechnet wird, und/oder die Begrenzungsschaltung (30) so ausgebildet ist, dass sie als Betriebsparameter eine Temperaturmessung des Triebwerks (TM_49) aufnimmt, wobei eine Differenz zwischen der Temperaturmessung und einer vorgegebenen Höchsttemperatur (TM49_MAX) berechnet wird.

7. Triebwerk für ein Flugzeug, mit:
• einer Brennkammer (13),
• einer Treibstoffdosiereinrichtung, die einen Dosierschieber (12), dessen Position einen Volumenstrom von in die Brennkammer eingespritztem Treibstoff bestimmt, und einen Aktuator (11) zum Verschieben des Dosierschiebers in Abhängigkeit eines elektrischen Steuerstroms (I_com) aufweist,
• einem Positionssensor (14) zum Messen einer Position des Dosierschiebers und zum Ausgeben einer Positionsmessung (M_Pos),
• einem Geschwindigkeitssensor (15) zum Messen einer Drehzahl des Triebwerks und zum Ausgeben einer Drehzahlmessung (M_XNBP),
• einer Steuereinheit (16) zum Ausgeben eines Drehzahlsollwerts (C_XNBP), um einen Fehler des Positionssensors zu erfassen und um ein Fehlersignal (Sd) auszugeben, wenn ein Fehler des Positionssensors erfasst wird, sowie
• einem Steuerungssystem (100) nach einem der Ansprüche 1 bis 6.

8. Triebwerk nach Anspruch 7, wobei der Positionssensor (14) ein erstes Sensorelement und ein zweites Sensorelement aufweist, wobei das erste Sensorelement dazu ausgeführt ist, eine Position des Dosierschiebers zu messen und eine erste Positionsmessung auszugeben, wobei das zweite Sensorelement dazu ausgeführt ist, eine Position des Dosierschiebers zu messen und eine zweite Positionsmessung auszugeben, wobei die Steuereinheit (16) dazu ausgeführt ist, einen Fehler des Positionssensors zu erfassen, wenn eine Abweichung zwischen der ersten Positionsmessung und der zweiten Positionsmessung vorliegt, die größer als ein vorgegebener Schwellenwert ist, oder wenn keine erste Positionsmessung und keine zweite Positionsmessung aufgenommen werden.

9. Steuerungsverfahren für ein Flugzeugtriebwerk, wobei das Triebwerk (10) Folgendes aufweist:
• eine Brennkammer (13),
• eine Treibstoffdosiereinrichtung mit einem Dosierschieber (12), dessen Position einen Volumenstrom von in die Brennkammer eingespritztem Treibstoff bestimmt, und einem Aktuator (11) zum Verschieben des Dosierschiebers in Abhängigkeit eines elektrischen Steuerstroms (I_com),
• einen Positionssensor (14) zum Messen einer Position des Dosierschiebers und Ausgeben einer Positionsmessung (M_Pos),
• einen Geschwindigkeitssensor (15) zum Messen einer Drehzahl des Triebwerks und Ausgeben einer Drehzahlmessung (M_XNBP), sowie
• eine Steuereinheit (16) zum Ausgeben eines Drehzahlsollwerts (C_XNBP), um einen Fehler des Positionssensors zu erfassen und um ein Fehlersignal (Sd) auszugeben, wenn ein Fehler des Positionssensors erfasst wird,
wobei das Steuerungsverfahren die folgenden Schritte aufweist:
• Überwachen (51) eines Fehlers des Positionssensors (14),
• wenn kein Fehler des Positionssensors vorliegt,
∘ Bestimmen (52) eines Sollwerts für den Treibstoffmassenstrom (C_WF) in Abhängigkeit des Drehzahlsollwerts (C_XNBP) und der Drehzahlmessung (M_XNBP),
∘ Umwandeln (53) des Sollwerts für den Treibstoffmassenstrom (C_WF) in einen Positionssollwert (C_Pos),
∘ Bestimmen (54) eines elektrischen Steuerstroms im Normalbetrieb (54) in Abhängigkeit des Positionssollwerts (C_Pos) und der Positionsmessung (M_Pos), und
∘ Ausgeben (55) des elektrischen Steuerstroms in Normalbetrieb (I_nom) an den Aktuator (11) der Treibstoffdosiereinrichtung,
• wenn ein Fehler des Positionssensors vorliegt,
∘ Bestimmen (57) eines elektrischen Steuerstroms im Notbetrieb (I_dég) in Abhängigkeit des Drehzahlsollwerts (C_XNBP) und der Drehzahlmessung (M_XNBP), sowie
∘ Ausgeben (58) des elektrischen Steuerstroms im Notbetrieb (I_dég) an den Aktuator (11) der Treibstoffdosiereinrichtung.

## Claims

1. A control system for an aircraft turbine engine, the turbine engine (10) comprising:
▪ a combustion chamber (13),
▪ a fuel metering valve including a metering slide (12), a position of which determines a volumetric flow rate of fuel injected into the combustion chamber and an actuator (11) arranged to displace the metering slide depending on a control electric current (I_com),
▪ a position sensor (14) arranged to measure a position of the metering slide and deliver a position measurement (M_Pos),
▪ a speed sensor (15) arranged to measure a rotational speed of the turbine engine and deliver a rotational speed measurement (M_XNBP), and
▪ a monitoring unit (16) arranged to deliver a rotational speed setpoint (C_XNBP), to detect a failure of the position sensor and to deliver a failure signal (Sd) in the case of detection of a failure of the position sensor,
the control system (100) comprising:
▪ a nominal-mode processing chain (110) including:
- a global corrector (21) arranged to receive the rotational speed setpoint (C_XNBP) and the rotational speed measurement (M_XNBP) and determine a fuel mass flow rate setpoint (C_WF) depending on the rotational speed setpoint (C_XNBP) and the rotational speed measurement (M_XNBP),
- a converter (22) arranged to convert the fuel mass flow rate setpoint (C_WF) into a position setpoint (C_Pos), and
- a local corrector (23) arranged to receive the position setpoint (C_Pos) and the position measurement (M_Pos) and determine a nominal-mode control electric current (I_nom) depending on the position setpoint (C_Pos) and the position measurement (M_Pos),
▪ a degraded-mode processing chain (120) including a direct corrector (122) arranged to receive the rotational speed setpoint (C_XNBP) and the rotational speed measurement (M_XNBP) and determine a degraded-mode control electric current (I_deg) depending on the rotational speed setpoint (C_XNBP) and the rotational speed measurement (M_XNBP), and
▪ a mode management module (130) arranged to receive the failure signal (Sd), the nominal-mode control electric current (I_nom) and the degraded-mode control electric current (I_deg), and to deliver, to the actuator (11) of the fuel metering valve, the nominal-mode control electric current (I_nom) in the absence of reception of the failure signal and the degraded-mode control electric current (I_deg) in the case of reception of the failure signal.

2. The control system according to claim 1, wherein the direct corrector (122) is arranged to further receive one or more flight parameter(s) of the aircraft and/or one or more operating parameter(s) of the turbine engine, the degraded-mode control electric current (I_deg) being further determined depending on the flight parameters of the aircraft and/or the operating parameters of the turbine engine.

3. The control system according to one of claims 1 and 2, wherein the degraded-mode processing chain (120) further includes a gradient limiter (40) arranged to receive the rotational speed setpoint (C_XNBP) and determine an acceleration-limited speed setpoint (C_XNBPOK), the acceleration-limited speed setpoint being determined so as to limit a speed of evolution of the rotational speed setpoint, the acceleration-limited speed setpoint (C_XNBPOK) being used by the direct corrector (122) instead of the rotational speed setpoint (C_XNBP).

4. The control system according to claim 3, wherein the gradient limiter (40) is further arranged to receive one or more flight parameter(s) of the aircraft and/or one or more operating parameter(s) of the turbine engine, the predetermined maximum acceleration threshold being variable depending on the flight parameters and/or the operating parameters of the turbine engine.

5. The control system according to one of claims 1 to 4, wherein the degraded-mode processing chain (120) further includes a limiting circuit (30) arranged to receive the rotational speed setpoint (C_XNBP), the rotational speed measurement (M_XNBP) and an operating parameter of the turbine engine (M_TM49, M_PS32), and determine a limited speed setpoint (C_XNBPlim), the limited speed setpoint (C_XNBPlim) being determined by calculating a difference between the operating parameter (M_PS32) and a predetermined minimum threshold parameter (PS32_MIN) or between the operating parameter (M_TM49) and a predetermined maximum threshold parameter (TM49_MAX), by multiplying said difference by a coefficient relating to the operating parameter (K_TM49, K_PS32), by adding the rotational speed measurement (M_XNBP) to the result of the multiplication, and by taking, as limited speed setpoint (C_XNBPlim), the maximum between the result of the addition and the rotational speed setpoint when the difference is calculated relative to a minimum threshold parameter, and the minimum between the result of the addition and the rotational speed setpoint when the difference is calculated relative to a maximum threshold parameter.

6. The control system according to claim 5, wherein the limiting circuit (30) is arranged to receive, as an operating parameter, a pressure measurement of the turbine engine (M_PS32), a difference being calculated between the pressure measurement and a predetermined minimum pressure (PS32_MIN), and/or the limiting circuit (30) is arranged to receive, as an operating parameter, a temperature measurement of the turbine engine (TM_49), a difference being calculated between the temperature measurement and a predetermined maximum temperature (TM49_MAX).

7. A turbine engine for an aircraft comprising:
▪ a combustion chamber (13),
▪ a fuel metering valve including a metering slide (12), a position of which determines a volumetric flow rate of fuel injected into the combustion chamber and an actuator (11) arranged to displace the metering slide depending on a control electric current (I_com),
▪ a position sensor (14) arranged to measure a position of the metering slide and deliver a position measurement (M_Pos),
▪ a speed sensor (15) arranged to measure a rotational speed of the turbine engine and deliver a rotational speed measurement (M_XNBP),
▪ a monitoring unit (16) arranged to deliver a rotational speed setpoint (C_XNBP), to detect a failure of the position sensor and to deliver a failure signal (Sd) in the case of detection of a failure of the position sensor, and
▪ a control system (100) according to one of claims 1 to 6.

8. The turbine engine according to claim 7, wherein the position sensor (14) comprises a first sensitive element and a second sensitive element, the first sensitive element being arranged to measure a position of the metering slide and deliver a first position measurement, the second sensitive element being arranged to measure a position of the metering slide and deliver a second position measurement, the monitoring unit (16) being arranged to detect a failure of the position sensor in the case of a deviation between the first position measurement and the second position measurement which is greater than a predetermined threshold or in the absence of reception of the first position measurement and of the second position measurement.

9. A control method for an aircraft turbine engine, the turbine engine (10) comprising:
▪ a combustion chamber (13),
▪ a fuel metering valve including a metering slide (12), a position of which determines a volumetric flow rate of fuel injected into the combustion chamber and an actuator (11) arranged to displace the metering slide depending on a control electric current (I_com),
▪ a position sensor (14) arranged to measure a position of the metering slide and deliver a position measurement (M_Pos),
▪ a speed sensor (15) arranged to measure a rotational speed of the turbine engine and deliver a rotational speed measurement (M_XNBP), and
▪ a monitoring unit (16) arranged to deliver a rotational speed setpoint (C_XNBP), to detect a failure of the position sensor and to deliver a failure signal (Sd) in the case of detection of a failure of the position sensor,
the control method comprising the steps consisting of:
▪ supervising (51) a failure of the position sensor (14),
▪ in the absence of failure of the position sensor,
- determining (52) a fuel mass flow rate setpoint (C_WF) depending on the rotational speed setpoint (C_XNBP) and the rotational speed measurement (M_XNBP),
- converting (53) the fuel mass flow rate setpoint (C_WF) into a position setpoint (C_Pos),
- determining (54) a nominal-mode control electric current (54) depending on the position setpoint (C_Pos) and the position measurement (M_Pos), and
- delivering (55), to the actuator (11) of the fuel metering valve, the nominal-mode control electric current (I_nom),
▪ in the case of a failure of the position sensor,
- determining (57) a degraded-mode control electric current (I_deg) depending on the rotational speed setpoint (C_XNBP) and the rotational speed measurement (M_XNBP), and
- delivering (58), to the actuator (11) of the fuel metering valve, the degraded-mode control electric current (I_deg).
